# EUROPÄISCHE PATENTSCHRIFT

(11) **EP 0 591 249 B1**
(45) Veröffentlichungstag und Bekanntmachung des Hinweises auf die Patenterteilung: **07.06.1995**
(21) Anmeldenummer: 92911125.0
(22) Anmeldetag: 04.06.1992
(51) Int. Cl.: G07C 5/08

(54) **INTELLIGENTES TERMINAL ALS GESICHERTER DATENTRÄGER**
INTELLIGENT TERMINAL AS PROTECTED DATA CARRIER
TERMINAL INTELLIGENT UTILE COMME SUPPORT PROTEGE DE DONNEES

(30) Priorität: 05.06.1991 DE 4118486; 15.01.1992 DE 4200863; 17.01.1992 DE 9200512 U; 12.02.1992 DE 9201776 U
(43) Veröffentlichungstag der Anmeldung: 13.04.1994
(73) Patentinhaber: WB ELECTRONIC, D-86165 Augsburg (DE)
(72) Erfinder: WEIXLER, Bernhard, D-8900 Augsburg (DE)
(74) Vertreter: Körber, Wolfhart, Dr. rer.nat.
(86) Internationale Anmeldenummer: EP9201248
(87) Internationale Veröffentlichungsnummer: WO9222043

(56) Entgegenhaltungen:
- EP-A- 0 154 015
- EP-A- 0 177 020
- EP-A- 0 184 067
- EP-A- 0 203 683
- DE-A- 3 147 314
- DE-A- 3 802 801
- FR-A- 2 535 491
- FR-A- 2 612 319
- GB-A- 2 119 095
- PATENT ABSTRACT OF JAPAN, vol. 8, No. 101 (P-273)(1538) 12 May 1984 & JP-A--59 011 478 (NIPPON DENSHIN DENWA KOSHA) 21 January 1984

## Beschreibung

### Intelligentes Terminal als gesicherter Datenträger

Bekannt sind Computer bzw. Rechner, mit denen mit in eine zentrale Prozessoreinheit eingegebener Software entsprechend vielfältige logische Operationen und Informationsspeichervorgänge ausgeführt werden können. Bekannt sind sogenannte Großrechner, deren Leistungsfähigkeit hinsichtlich Art und Umfang derartiger Prozesse außerordentlich groß ist. Demgegenüber hat sich aber auch ein Markt für Klein- und Minirechner als sinnvoll erwiesen und entwickelt, wobei diese teils als selbständiges Gerät, teils als Bestandteil spezieller anderweitiger Geräte Verwendung finden. Es sind hier die Taschenrechner und die elektronischen Notiz-"Bücher" zu nennen. Insbesondere gibt es bereits Taschenrechner, die nicht größer als eine Kreditkarte sind, obwohl sie eine Tastatur, ein Display und eine Logik mit Speicher enthalten. Das erwähnte elektronische Notizbuch hat dagegen eine größere Kapazität hinsichtlich der Information und der Datenverarbeitung und bietet zusätzlich Möglichkeiten, insbesondere den Anschluß eines solchen Notizbuches an einen Computer zur Übergabe in dem Notizbuch enthaltener Information. Die Eingabe in ein derartiges elektronisches Notizbuch erfolgt mittels einer Tastatur, die ein Bestandteil desselben ist.

Aus der GB-A-2,156,552 ist ein intelligentes Terminal mit Eingabetastatur, Display und eigener Stromversorgung bekannt. Dieses ist so ausgebildet, daß es in den Schacht einer Aufnahmeeinrichtung eines größeren transportierbaren Rechners einschiebbar ist. Über eine Schnittstelle mit mechanischen Kontakten ist dieses Terminal mit dem Rechner zu verbinden, so daß in das Terminal eingegebene und dort zwischengespeicherte Daten an den Rechner weitergegeben werden können. Es ist somit ein Datentransfer von diesem Terminal in den Rechner vorgesehen, um dann in diesem Rechner diese Daten entsprechend dessen höherer Leistungsfähigkeit verarbeiten zu können.

Ein gleichartiges Prinzip beschreibt die GB-A-2,079,995, bei dem ebenfalls von einem als Informationseinrichtung verwendeten transportablen Terminal mit Dateneingabemöglichkeit in dieses Terminal eingegebene Daten an eine Hauptstation weitergegeben werden können. Die Hauptstation hat die Eigenschaft eines Rechners. Das transportable Terminal ist hier vorzugsweise eine elektronische Armbanduhr. Es ist optischer oder elektronischer bidirektionaler Datentransfer über die Schnittstelle dieser beiden Dateneinrichtungen vorgesehen.

Ein Tischrechner, in dem eine auch eigenständig verwendbare tragbare Rechnereinheit einzusetzen ist, ist aus der DE-A-23 54 042 bekannt. Die Rechnereinheit und der Tischrechner haben jeweils eine eigene Tastatur, eigenes Display und eigene Prozessoreinheit. Zu verbinden sind diese Geräte über eine Schnittstelle. Zweck der Verbindung ist, die nur begrenzte Funktionskapazität der Rechnereinheit je nach Bedarf durch die gröbere Kapazität des angeschlossenen Tischrechners zu erweitern. Es ist auch alternative Verbindung dieser Rechnereinheit mit jeweils einem anderen Tischrechner mit z.B. anderer Erweiterungsmöglichkeit angegeben.

Weitere ähnliche Systeme sind auch in den US-Patentschriften 4,523,087 und 4,454,414 beschrieben. Noch weiterer Stand der Technik mit transportablem Datenträger enthalten die US-Patentschriften 4,277,837 und 4,614,861.

Aus der EP-A-0203683 ist eine multifunktionale Bank-/Transaktionskarte (smart card) bekannt, die eine Tastatur zur Eingabe der für solche Karten üblichen Sicherheitskodierung hat, wobei jedoch die in der Karte gespeicherten Daten mit dieser Tastatur nicht manipulierbar sind. Diese Karte kann auch noch in der Weise ergänzt sein, daß sie außerdem eine separate Zusatzfunktion ausführen kann. Mit der Tastatur können so, einem elektronischen Notizbuch entsprechend, in die Karte zum Verbleib z.B. zu speichernde Telefonnummern und dergleichen eingegeben werden.

Die EP-A-0177020 beschreibt ein System mit u.a. den Merkmalen, die im Oberbegriff des Anspruchs 1 zur vorliegenden Erfindung angegeben sind. Das Terminal kann dort (S. 22, Z. 6-8) auch mit intelligenter Funktion ausgerüstet sein, die in dem Terminal dieser Funktion entsprechend vorgegebene Verarbeitung dort gespeicherter Daten ausführt. Eine der Erfindung kennzeichnungsgemäße Tastatur und Bestimmung derselben ist dort jedoch nicht offenbart.

Ein anderes Gerät, in dem ein Kleinrechner ein Bestandteil ist, ist das Telefon und für den hier vorliegenden Fall besonderes interessierend das Autotelefon. Es besitzt eine Tastatur zum Wählen und ein Display zur Anzeige von wenigstens Ziffern. Auch ist darin ein Speicher mit in der Regel aber nur kleinem Speichervolumen enthalten.

Die vorliegende Erfindung bezieht sich auf ein System für Datentransfer, bei dem ebenfalls ein intelligentes Terminal als Datenträger benutzt wird. Vorzugsweise ist dieser Datenträger auch gegen unautorisierten Zugang zu dessen Daten gesichert. Aus dem voranstehend genannten Stand der Technik ist ein solches intelligentes Terminal dem Prinzip nach bekannt. Eine generelle Aufgabe der vorliegenden Erfindung ist, zwischen wenigstens zwei Rechnern bzw. Datengeräten, die jedoch voneinander unterschiedlich sind, einen solchen Datentransfer bidirektional durchführen zu können, bei dem es außerdem möglich ist, die zu transferierenden Daten zusätzlich zu beeinflussen, zu ergänzen und dergleichen. Es soll aber auch möglich sein, Zugang zu den Daten in wenigstens einem der dem System zugehörenden Rechner bzw. Datengeräte von einer Sicherungskodierung abhängig zu machen. Eine besondere Ausgestaltung bzw. Anwendung eines Systems nach der voranstehenden Aufgabe ist ein solches, bei dem ein Rechner bzw. Datengerät des Systems eine (zentrale) Bürostation ist. Der Rechner bzw. das Datengerät unterschiedlicher Art, das zu diesem speziellen System gehört, ist ein datenverarbeitendes Bordgerät in einem Verkehrsmittel, insbesondere einem Fahrzeug. Zum Beispiel ist ein solches Systems in der Weise zu verwenden, daß z.B. mittels eines Fahrtenschreibers in dem Bordgerät aufgenommene Daten dort zunächst gespeichert werden, dann aber an die zentrale Bürostation zu transferieren sind.

Diese Aufgabe wird mit den Mitteln des Patentanspruches 1 gelöst. Spezielle Ausgestaltungen und Weiterbildungen der Erfindung gehen aus den Unteransprüchen hervor.

Für den Datentransfer ist in dem erfindungsgemäßen System ein intelligentes Terminal vorgesehen, wie es in vielen seinen Einzelheiten aus dem voranstehend genannten Stand der Technik bekannt ist. Bei der Erfindung ist das intelligente Terminal dazu verwendet, zwischen Datengeräten ganz verschiedener Art und Bestimmung nicht nur einfachen Datentransfer durchzuführen, sondern bei der Erfindung ist in dem Terminal zwischen der Datenaufnahme in der einen Station und der Datenübergabe in der anderen Station eine wahlfreie, gewillkürte Beeinflussung der Transferdaten durchführbar, z.B. um diese Daten noch weiter aufzubereiten und dergleichen. Mit einer solchen erfindungsgemäßen Lösung läßt sich z.B. die Aufgabe erfüllen, in einem Fahrzeug, insbesondere einem Taxi, Mietfahrzeug oder auch einem sonstigen Geschäftsfahrzeug, aber auch auf einem Schiff oder in einem Flugzeug, Betriebsdaten, wie Zeit und Dauer der Benutzung, zurückgelegte Wegstrecke, charakteristische Merkmale der Fahrweise, der Betriebsweise und dgl. aufzunehmen, zu speichern und später auszuwerten. Diese Auswertung der interessierenden Betriebsdaten wird dann in der Regel in einer Geschäftsstelle des Unternehmens durchgeführt werden. Entsprechend der Möglichkeit auch bidirektionaler Arbeitsweise lassen sich mittels des Terminals Daten auch in der Gegenrichtung, d.h. von der Geschäftstelle zum Fahrzeug und dgl. übertragen. Ein diesbezüglicher Anwendungsfall ist z.B., dem Fahrzeug bzw. dem Fahrer Anweisungen oder Limits zu geben. Diese Möglichkeit kann aber auch dazu verwendet werden, in dem Speicher eines Autotelefons neue Telefonnummern einzugeben.

Bezüglich besonderer Ausgestaltungen der vorliegenden Erfindung handelt es sich um Anpassungen an schon vorhandene Einrichtungen, wie z.B. ein Bordcomputer des Fahrzeugs, ein Autotelefon und dergleichen, sowie an die Computeranlage des Betriebs. Je nachdem enthält das erfindungsgemäße intelligente Terminal Einrichtungen, die für die Erfüllung der Aufgabe notwendig sind und die nicht als Bestandteil ohnehin bereits vorhandener elektronischer Rechner und Informationseinrichtungen (auch) mitbenutzt werden können.

Weitere Ausgestaltungen der Erfindung sind Anpassungen an konstruktive örtliche Gegebenheiten, wie z.B. die Plazierung eines erst zusätzlich installierten Bordgerätes in dem Fahrzeug. Hervorzuheben ist die Idee, dieses zusätzliche Bordgerät in dem in der Armaturentafel oder der Mittelkonsole eines Fahrzeugs regelmäßig vorhandenen Schacht unterzubringen, der an sich für einen dazu herauszunehmenden Aschenbecher vorgesehen ist.

Noch weitere Ausgestaltungen beziehen sich auf konstruktive Details des intelligenten Terminals.

Ein im erfindungsgemäßen System verwendetes Terminal schließt ein: Einen Datenspeicher, eine zentrale Prozessoreinheit (CPU) eine Einrichtung, z.B. eine Tastatur, zur extern ausführbaren, gewillkürten Dateneingabe und die schon erwähnten Schnittstellen bzw. Adaptereinrichtungen zum Anschluß dieses Terminals an die Datenquelle des Objekts, z.B. eines schon oben erwähnten Fahrzeugs, und zum Anschluß des Terminals an eine Daten-Weiterverarbei tung, z.B. einen Büro-PC. Das Terminal kann ein Display haben. Das erfindungsgemäße Terminal hat z.B. entsprechende Stromanschlußkontakte zur externen Stromversorgung. Es kann oder gegebenenfalls muß im Terminal auch noch eine autonome Stromversorgung, einsetzbar während der Zeitdauer, während der das Terminal von jeglicher externer Stromversorgung getrennt ist, vorgesehen sein. Die zentrale Prozessoreinheit organisiert den Speicher, die Schnittstellen, die Tastatur und das Display.

Eine ganz besonders zweckmäßige Ausführungsform eines Details besteht darin, für die Datenübertragung, d.h. für die Schnittstellen, zwischen einerseits dem Terminal und andererseits den verschiedenen Rechnern bzw. Datengeräten, z.B. dem im Objekt befindlichen Gerät bzw. dem Büro-PC optische oder induktive Kopplung vorzusehen, nämlich anstelle von Steckerverbindungen. Eine solche optische bzw. induktive Kopplung ist verschleißfrei, was insbesondere für Datenübertragung von großer Bedeutung ist. Für eine solche optische Kopplung lassen sich bekannte optoelektronische Bauelemente mit Lumineszenz- oder Laserdioden als Sender und mit Fotodioden als Empfänger verwenden. Für die autonome Stromversorgung kann speziell für den Fall eines dynamischen (stets zu regenierenden) Speichers in dem erfindungsgemäßen Terminal eine nicht wiederaufladbare Batterie oder aber auch ein Akkumulator verwendet sein. Dieser kann z.B. auch mittels zusätzlich vorgesehener Solarzellen wiederaufladbar sein. Ist für den Speicher keine ständige Stromzufuhr erforderlich, so kann auch allein eine Solarzelle für den Betrieb des Tastenfeldes und/oder des Displays genügen.

Für die vorliegende Erfindung ist wichtig, in das Terminal zusätzlich zur bestimmungsgemäßen Informationsaufnahme im Objekt, d.h. im jeweiligen Rechner bzw. Datengerät auch noch weitere gewillkürte Information, und zwar auch ortsungebunden, eingeben zu können. Zum Beispiel für die Verwendung als Fahrtenbuch ist es nützlich, auch noch persönliche und/oder anderweitig aktuelle Information als Notiz einzugeben, dies insbesondere auch dann, wenn sich der Datenträger des Terminals außerhalb eines jeglichen der genannten Geräte des Objekts bzw. des PCs befindet.

Von besonderem Interesse kann sein oder ist, daß nur von autorisierten Personen und/oder nur in einem bestimmten der Rechner, z.B. nur in jeweils einem bestimmten Fahrzeug oder dgl., in dem Terminal gespeicherte Information, die zuvor beispielsweise während einer Autofahrt eingespeichert worden ist, übergeben, z.B. im Büro abgefragt oder sonstwie zugänglich gemacht werden kann. Eine diesbezügliche Ausführungsform zur Erfindung ist die, bei der in das Terminal ein Geheimcode eingegeben ist, der allein die Informationsausgabe aktivieren kann. Ein solcher Code kann z.B. über das eigene Tastaturfeld des Terminals in dasselbe eingegeben werden. Es kann hierzu aber auch ein angeschlossenes Tastaturfeld, z.B. das des Bürocomputers verwendbar gemacht sein.

Worauf auch noch später näher eingegangen werden wird ist, ein Autotelefon in das Gesamtsystem zu integrieren, in dem das erfindungsgemäße Terminal ein funktioneller Bestandteil ist. Diese Integration erfolgt über eine entsprechende Schnittstelle zwischen dem Telefon und dem dem Terminal zugeordneten Datengerät. Das Autotelefon kann dann (auch) dazu verwendet werden, die im erfindungsgemäßen Terminal aufgenommene und gegebenenfalls schon gespeicherte Information, z.B. auf Anruf seitens des Büros, auch telefonisch abzurufen. Auch kann der Speicher und/oder das Display des Terminals zur Erweiterung der Möglichkeiten und Nutzungen des Telefons verwendet werden.

Ein weiterer wichtiger Gesichtspunkt zur vorliegenden Erfindung liegt in Einzelheiten der mechanischen Ausführung, mit der das erfindungsgemäße Terminal seiner Aufgabe und Anwendung in besonderer Weise angepaßt ist. Bekannte PCs arbeiten mit 5 1/4 Zoll- und/oder mit 3 1/2 Zoll-Disketten genormter Art. Die Computergeräte enthalten als Aufnahmeeinrichtungen für eine solche Diskette oder dgl. Einschubeinrichtungen, in die Disketteneinschübe auswechselbar eingesetzt sind. Diese Möglichkeit des Einsetzens ist zwar in erster Linie für gegebenenfalls erforderliche Reparaturen gedacht. Bei der Erfindung ist vorgesehen, anstelle des in den üblichen PCs vorhandenen Einschubteils, in das die Disketten einzulegen sind, ein an die Erfindung angepaßtes Datenlesegerät mit (schon oben erwähnter) insbesondere optischer Datenübergabe an den PC einzusetzen. In diesem Datenlesegerät sind diejenigen Funktionsbestandteile enthalten, die dazu erforderlich sind, im Speicher des erfindungsgemäßen Terminals enthaltene Information in den PC einlesen zu können. Eine besonders bevorzugte Ausführungsform der Erfindung ist die, bei der das Terminal die Form und die Abmessungen einer Diskette hat. Diese "Diskette" ist dann der eigentliche Datenträger für die zwischen dem mobilen Objekt, z.B. dem Fahrzeug, und dem Büro-PC zu übertragenden, im mobilen Objekt aufgenommenen Daten (wie dies von der Scheibe eines konventionellen Fahrtenschreibers her bekannt ist). Diese "Diskette" hat aber zur wie schon oben beschriebenen zusätzlichen Eingabe von Information auch noch eine Eingabeeinrichtung, z.B. ein Tastenfeld, und gegebenenfalls ein Display sowie z.B. einen Solarzellengenerator, wie dies von Taschenrechnern im Scheckkartenformat her, jedoch nur rein konstruktiv, bekannt ist. Auf ein Terminal in Scheckkartenformat bzw. in der Form einer PC-Card ist noch weiter unten ausführlich eingegangen.

Das Terminal wird wie eine Diskette in das erwähnte, der Erfindung angepaßte spezielle Datenlesegerät des Büro-PCs eingeschoben und nach Bedarf und gegebenenfalls vorheriger Entsicherung der gespeicherten Information ausgelesen.

Ein gleichartiges Datenlesegerät ist im mobilen Objekt für Aufzeichnung der zu speichernden und auf den Büro-PC zu übertragenden Information vorzusehen. Bei bidirektionaler Übertragung sind diese Geräte sowohl als Datengeber als auch als Datenempfänger ausgeführt.

Eine für ein erfindungsgemäßes System besonders angepaßte Ausgestaltung hinsichtlich der Schnittstelle des Terminals nach Art einer Diskette ist weiter unten im Zusammenhang mit den Figuren eine besondere Ausführung für induktive Kopplung beschrieben. Übliche Disketten mit darin enthaltener magnetischer Speicherplatte haben Fenster für das Auslesen. Die spezielle Ausgestaltung der Erfindung besteht darin, bei einem erfindungsgemäß verwendeten Terminal, das nur die Form einer solchen Diskette hat, eine solche magnetische Speicherplatte aber nicht enthält, in diesem Fenster einen Magnetkopf vorzusehen, der dem in einer Ausgangsposition gehaltenen Magnetkopf eines üblichen Disketten-Lesegerätes gegenüberliegend positioniert ist, so daß eine induktive Verbindung zwischen diesen beiden Magnetköpfen für den Datentransfer besteht.

Im mobilen Objekt, z.B. einem Kraftfahrzeug, kann bereits ein Bordcomputer vorhanden sein, wie dies für Fahrzeuge der oberen Preisklasse sogar schon üblich ist. In einem solchen Falle können bereits Teile des Bordcomputers, der an den Datenbus im Fahrzeug angeschlossen ist, mitbenutzt werden, so z.B. die zentrale Prozessoreinheit und die RAM-/EEPROM- und ROM-Speicher.

Die Erfindung läßt sich aber auch problemlos in Fahrzeugen ohne Bordcomputer verwendbar machen, indem das für die Erfindung vorzusehende Terminal auch diese vorgenannten Funktionsteile mit enthält. Im Fahrzeug sind außerdem die zur Aufnahme der gewünschten charakteristischen Werte erforderlichen Sensoren vorzusehen, wie sie schon für den Fall vorhandener Bordcomputer und für moderne elektronische Fahrtenschreiber bekannt sind.

Mit der Erfindung sind verschiedene Betriebsweisen durchführbar. Wie schon mehrfach erwähnt, kann die im Terminal gespeicherte, gegebenenfalls nach Einschreiben noch zusätzlich ergänzte Information mittels des Büro-PCs ausgewertet werden. Damit ist die Erfindung bzw. die Erfassung der gewünschten Fahrzeug-Betriebsdaten der Computerisierung des modernen Bürobetriebs voll angepaßt.

Bei Vorhandensein eines Autotelefons im Fahrzeug kann im erfindungsgemäßen Terminal gespeicherte Information auch telefonisch abgefragt werden. Es ist dazu das Autotelefon über eine spezielle Schnittstelle mit dem erfindungsgemäßen Terminal, gegebenenfalls über den Bordcomputer, zu verbinden. Geeignet hierfür sind die Autotelefon-Netze. Zusätzlich zur telefonischen Datenübermittlung vom Fahrzeug in das Büro kann auch hier Übermittlung von Information in der Gegenrichtung vorgesehen sein und durchgeführt werden. Speicher, Dateneingabe und Display des erfindungsgemäßen Terminals können dabei darüberhinaus auch als funktionelle Erweiterungen für das Telefon verwendet sein.

Noch weitere Erläuterungen und Ausführungsformen und Ausgestaltungen der Erfindung gehen aus der nachfolgenden Figurenbeschreibung hervor.

Es zeigen:
- Figur 1: eine Übersicht,
- Figur 2: eine Erweiterung zur Erfindung,
- Figur 3: den im Fahrzeug vorzusehenden Anteil A der Fig. 1 im Detail,
- Figur 4: das Terminal und dessen Anschluß an die Auswertung,
- Figur 5: eine Detaildarstellung zum Terminal,
- Figur 6: eine detailliertere bzw. alternative Darstellung zur Verwendung mit einem Autotelefon, die
- Figuren 7 bis 9: konstruktive Ansichten,
- Figur 10: je eine weitere Ausgestaltung für induktive Kopplung und Energieübertragung, vorgesehen auf der Rückseite, z.B. eines Terminals der Figuren 8 und 9,
- Figur 11: ein Beispiel einer als Terminal weitergebildeten CD-Card und die
- Figuren 12 bis 15: besondere Ausführungen eines Bordgerätes, das als Einschub für einen (Aschenbecher-)Schacht in einem Fahrzeug ausgestaltet ist.

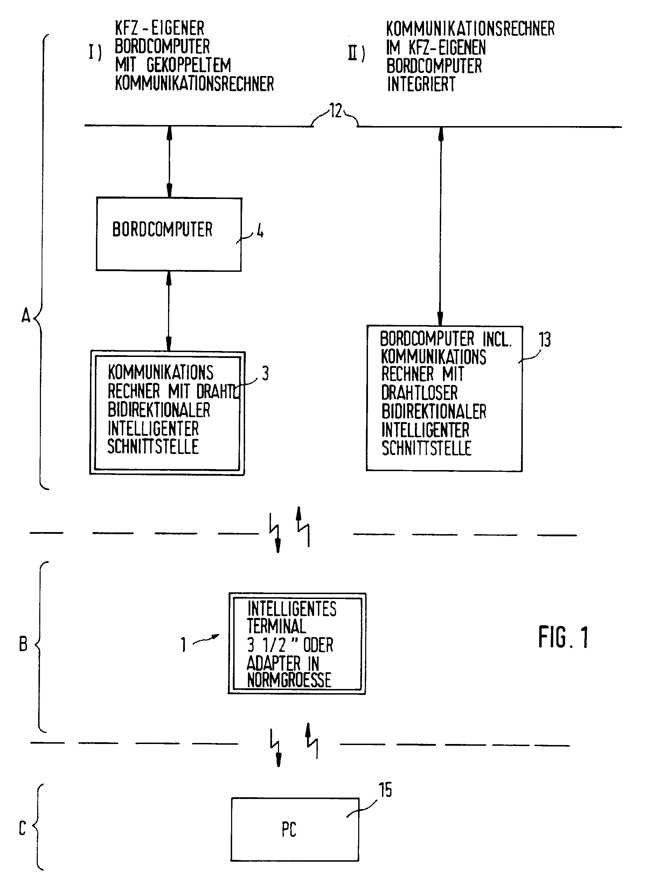

Das Schema der Figur 1 zeigt im Teil A derselben zur Erfindung gehörende Anteile des Datentransfer-Systems, soweit diese zu dem Verkehrsmittel, z.B. dem Fahrzeug, gehören. Der Teil B ist das eigentliche, transportable erfindungsgemäße intelligente Terminal und der Teil C zeigt den Anteil einer zentralen Bürostation, in der die z.B. endgültige Auswertung erfolgt, z.B. den im Büro vorhandenen PC.

Das intelligente Terminal 1 ist bereits vorangehend beschrieben worden, so daß es genügt, weitere diesbezügliche Einzelheiten im Zusammenhang mit den Teilen A und C der Figur 1 und weiteren Figuren zu beschreiben.

Der Teil A umfaßt zwei Fälle: I. denjenigen eines Fahrzeugs mit bereits darin vorhandenem Bordcomputer und II. denjenigen ohne einen solchen Computer. Mit 12 ist ein Datenbus des Fahrzeugs bezeichnet, über den von schon vorhandenen (Fall I) oder vorzusehenden Sensoren die interessierenden Informationsdaten angeliefert werden. Mit 3 ist ein Kommunikationsrechner bezeichnet, der eine insbesondere drahtlose bidirektionale intelligente Schnittstelle zum Anschluß des Terminals 1 hat. Der Kommunikationsrechner 3 ist mit dem Bordcomputer 4 des Fahrzeugs verbunden. Im Fall II. umfaßt der integrierte Kommunikationsrechner 13 die für die Erfindung wesentlichen Teile des Bordcomputers 4 und den Kommunikationsrechner 3 des Falles I. Der Bordcomputer 4 und der integrierte Kommunikationsrechner 13 erhalten ihre Daten über den internen Datenbus 12 des Objekts.

Die beiden Einheiten 3 und 13 enthalten gleichermaßen die vorzugsweise drahtlose bidirektionale intelligente Schnittstelle, über die das intelligente Terminal 1 zum Datenaustausch an diese Einheiten 3 bzw. 13 anzuschließen ist. Es ist also im Fall I ein Zusatzgerät 3 und im Fall II. ein komplettes Gerät 13 in dem Objekt, z.B. dem Fahrzeug, vorzusehen, von denen jeweils die Daten aufbereitet werden. Solange das Terminal 1 und der Kommunikationsrechner 3 bzw. 13 (im Fahrzeug) miteinander verbunden sind, kann die vorgesehene Datenaufnahme bzw. ein Datenaustausch erfolgen.

Das Terminal 1 kann abgetrennt werden und z.B. im Büro der Geschäftsstelle mit dem PC 15 zur Auswertung der im Terminal 1 aufgenommenen und gegebenenfalls noch zusätzlich eingegebenen Daten verbunden werden, wie dies die Figur 1 zeigt. Umgekehrt können auch vom PC Daten in das Terminals gegeben und aus diesem weiter in das Gerät 13 übertragen werden.

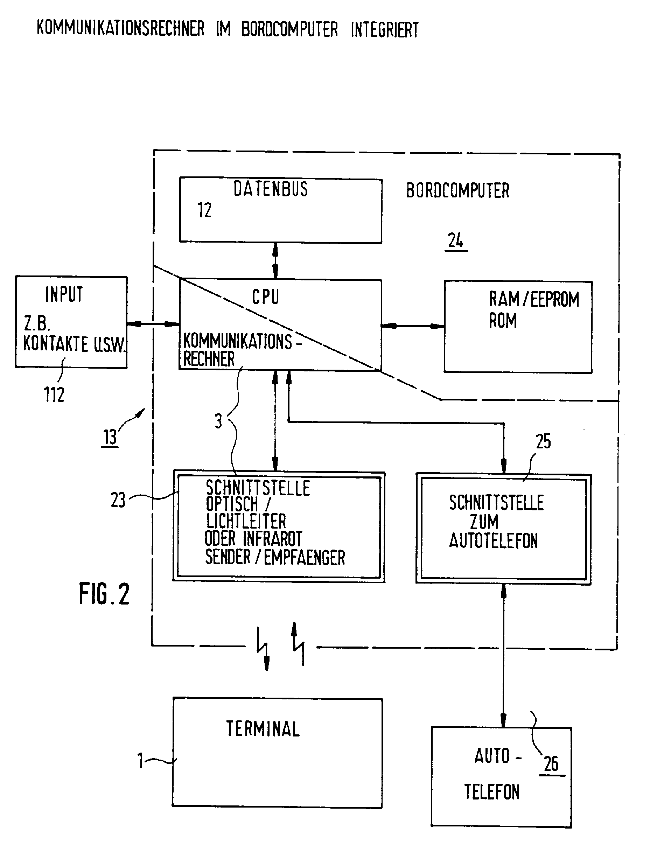

Figur 2 zeigt in etwas abgewandelter Darstellung den Inhalt der Figur 1, jedoch bereits eingeschlossen die Mitbenutzung eines Autotelefons. Wieder mit 13 ist insgesamt die im Fahrzeug vorgesehene Einheit mit dem einem Bordcomputer entsprechenden Anteil 24 und dem den Kommunikationsrechner bildenden Anteil 3 bezeichnet, zu dem auch die Schnittstelle 23 gehört, an die das Terminal 1 in der jeweiligen Betriebsphase anzuschließen ist.

Mit 25 ist eine ebenfalls mit dem Kommunikationsrechner 3 verbundene Schnittstelle zum Autotelefon 26 bezeichnet. Die in Figur 2 dargestellten Teile sind mit Ausnahme des Terminals 1 untereinander fest verdrahtet im Fahrzeug enthalten. Auch die Schnittstelle 25 ist für Datenübertragung in vorzugsweise beiden Richtungen geeignet.

Mit der Einrichtung nach Figur 2 kann die Information zum einen dem Terminal 1 übergeben werden. Zum anderen kann die Information auch über das Telefon 26 drahtlos in das Büro übertragen werden, und zwar indem das Telefon 26 über die Schnittstelle 25 zur unmittelbaren Datenübertragung mit dem Kommunikationsrechner verbunden wird. Die Information kann auch aus dem Terminal 1 zurück über die Schnittstelle 23 mit dem Kommunikationsrechner 3 und über denselben und über die Schnittstelle 25 dem Telefon zugeführt werden. Für die telefonische Datenübermittlung eignen sich besonders das C-Netz und das D-Netz, und zwar unter Verwendung der entsprechenden zwischenzuschaltenden Geräte wie einem Modem oder einer ISDN-Einheit.

Unabhängig von der telefonischen Übertragung kann mit einer Ausführung nach Figur 2 ebenso wie nach der Figur 1 mittels des Terminals 1 die Information an den Büro-PC 15 übergeben werden.

Mit 112 ist eine weitere Dateneingabemöglichkeit angedeutet.

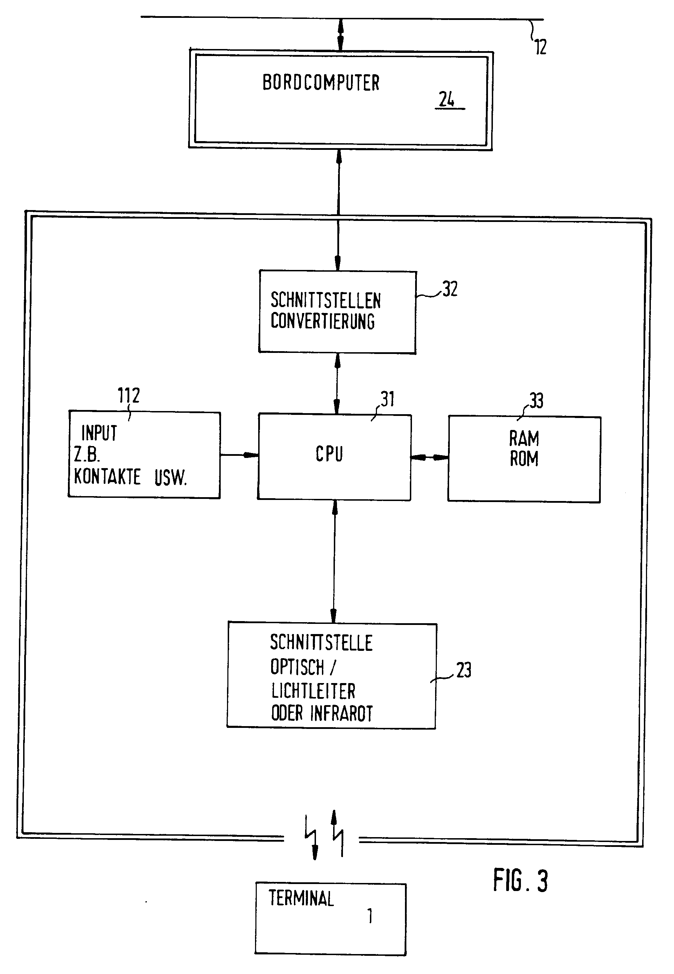

Figur 3 zeigt detaillierter dem Teil A der Figur 1 entsprechende Einzelheiten.

Mit 31 ist die zentrale Prozessoreinheit CPU bezeichnet. Sie erhält über den Bordcomputer 24 und eine Schnittstellenkonvertierung 32 vom Datenbus die entsprechenden Sensorsignale. Mit 33 ist der Speicher mit ROM- und RAM- oder EEPROM-Anteilen bezeichnet. Die zentrale Prozessoreinheit 31 organisiert die voranstehend beschriebenen Einheiten und die Schnittstelle 23 zum Anschluß des erfindungsgemäßen Terminals 1.

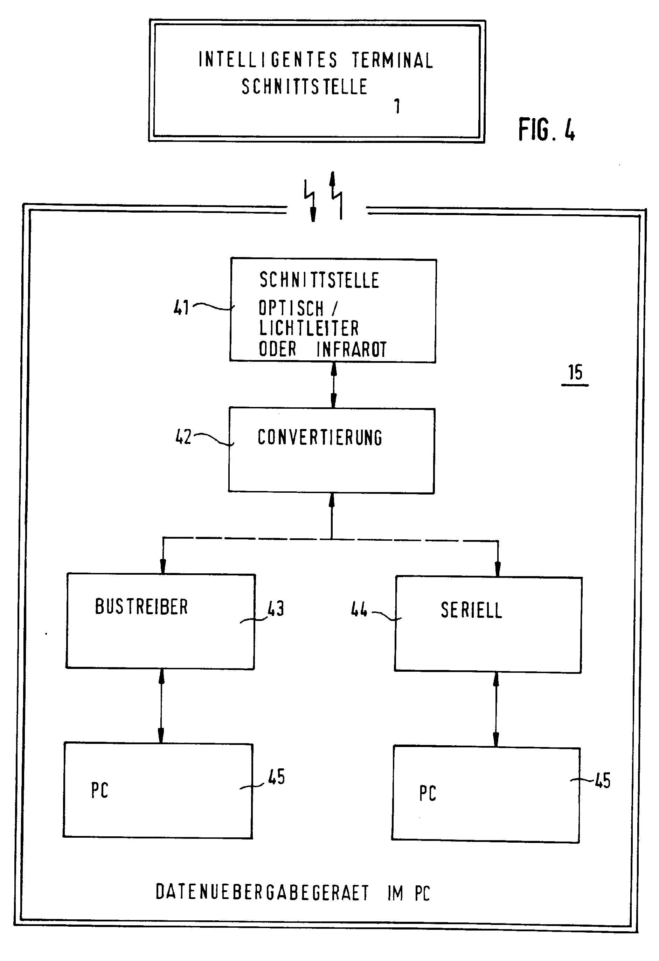

Die Figur 4 zeigt das Terminal 1, wie es an den Büro-PC 15 anzuschließen ist. Mit 41 ist die Schnittstelle bezeichnet, die vorzugsweise wiederum optoelektronisch mit dem Terminal 1 verbunden wird. Über die Konvertierung 42 kann entweder der Bustreiber 43 oder über die serielle Verknüpfung 44 der PC-Datenbus 45 angesteuert werden. Auch hier kann die Datenübertragung auch in entgegengesetzter Richtung erfolgen.

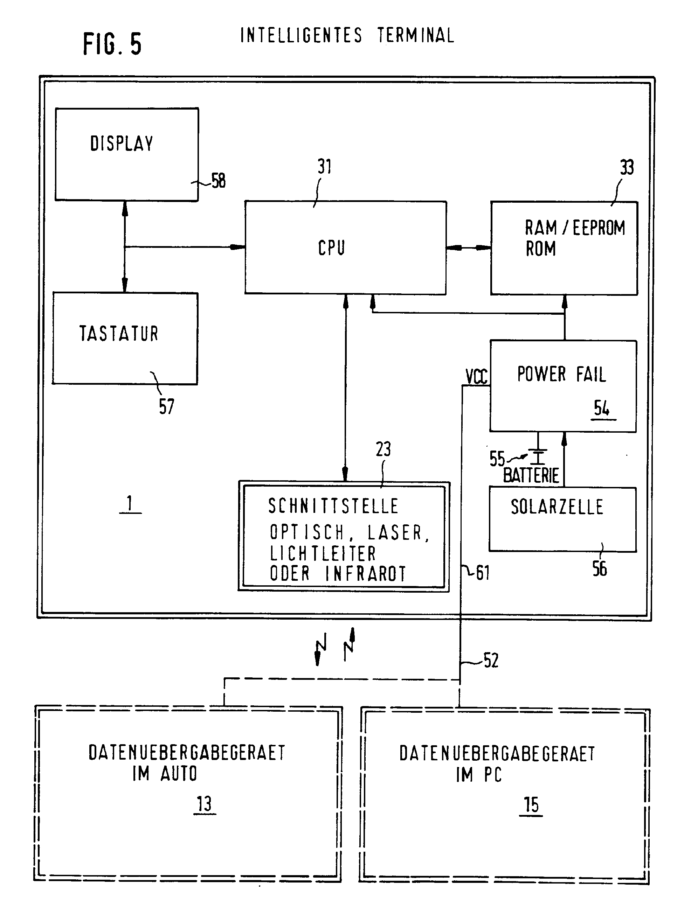

Die Figur 5 zeigt das den Teil B der Figur 1 betreffende intelligente Terminal 1 mit der mit 31 bezeichneten zentralen Prozessoreinheit CPU des Terminals 1, mit dem Speicher 53 des Terminals 1, der ein RAM-/EEPROM- und ein gegebenenfalls ROM-Speicher ist, und mit der Schnittstelle 23, die in dem Terminal 1 enthalten ist.

In Figur 5 ist wieder mit 13 das Datenübergabegerät bezeichnet, das sich im Fahrzeug befindet. Mit 15 ist das Datenübergabegerät bezeichnet, das zu dem Büro-PC gehört. Von den Einheiten 13 und 15, je nachdem an welches derselben das intelligente Terminal 1 augenblicklich angeschlossen ist, führt eine Stromversorgung 52 in das Terminal 1. Mit 54 ist eine Netzausfall-Schaltung bezeichnet, die von einer Batterie 55 und gegebenenfalls einer Solarzelle 56 als elektrischer Stromquelle gespeist wird.

Fakultativ umfaßt das Terminal 1 auch ein Tastaturfeld 57 zur gesonderten Informationseingabe in das Terminal 1 und alternativ ein Display 58, das geeignet ist, die jeweilige Eingabe sichtbar zu machen. Die Einheiten 57 und 58 können auch Bestandteil des Bordcomputers 4 bzw. des Autotelefons 26 sein, wie dies schon oben beschrieben ist.

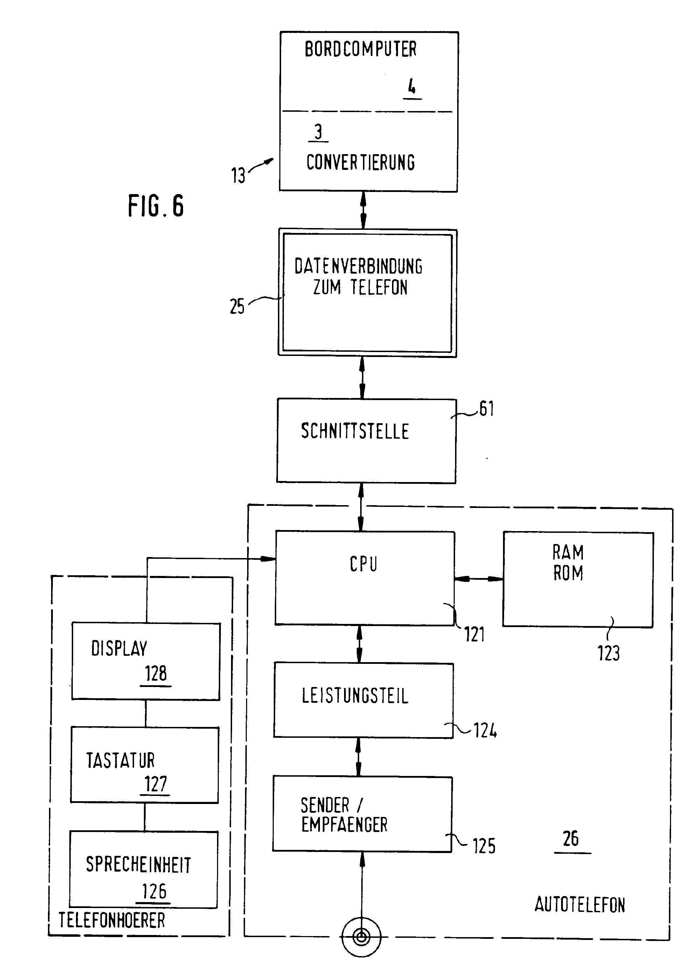

Figur 6 zeigt eine alternative Ausführungsform zur Verwendung zusammen mit einem Autotelefon. Das Autotelefon ist wieder mit 26 bezeichnet. Wie üblich gehört dazu eine zentrale Prozessoreinheit 121, ein Speicher 123, ein Leistungsteil 124, der Sende-/Empfangsteil 125, die Sprecheinheit 126, die Tastatur 127, das Display 128 und eine für die Erfindung zusätzlich vorgesehene Schnittstelle 129. Der Bordcomputer ist wieder mit 4, der Rechner mit 3 und es ist die Datenverbindung zum Telefon mit 25 und 61 bezeichnet, in der ein erfindungsgemäßes intelligentes Terminal enthalten ist.

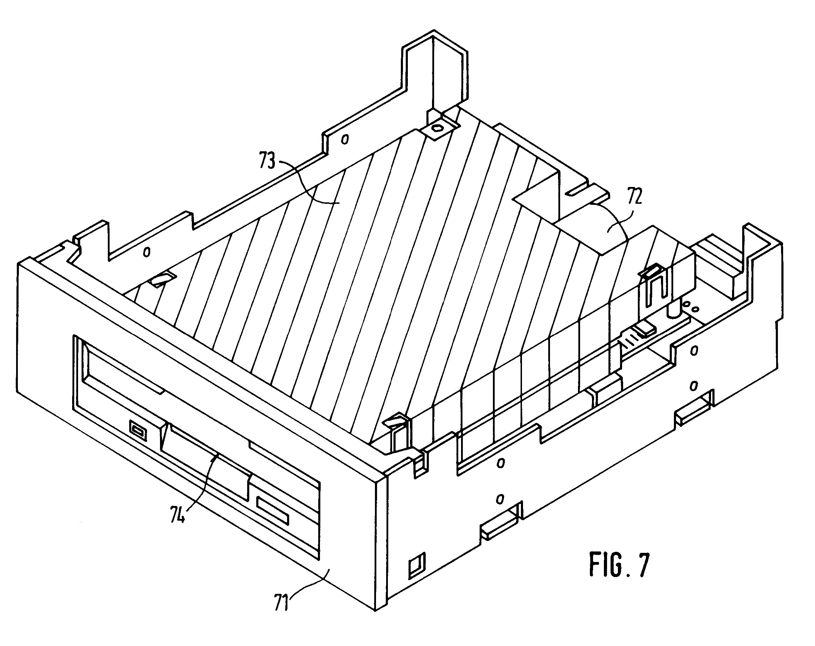

Figur 7 zeigt eine perspektivische Ansicht einer besonders bevorzugten, an vorhandene Geräte angepaßten konstruktiven Ausführung zu einem erfindungsgemäßen Terminal 1. Mit 71 ist eine Rahmenkonstruktion bezeichnet, die an die Abmessungen angepaßt ist, die derjenige Teil eines Diskettenlaufwerks hat, in den die übliche Diskette in einen PC einzuschieben ist. Rückseitig sind mit 72 pauschal Kontaktierungsanschlüsse bezeichnet, zur Kontaktierung der dem Rahmen 71 entsprechenden Einheit in einem hier nicht dargestellten PC. Diese Kontaktierungseinrichtung 72 umfaßt auch fakultativ vorgesehene optoelektronische Kopplung, wie sie voranstehend vielfach erwähnt und beschrieben ist.

Mit 73 ist die eigentliche Elektronik des für das Terminal 1 vorgesehenen Datenlesegerätes bezeichnet. Es enthält Teile und Einzelheiten, die erforderlich sind, um ein erfindungsgemäßes intelligentes Terminal 1, wie es z.B. in der Figur 5 gezeigt ist, in einem ansonsten üblichen PC auslesen zu können. Das die Form einer Diskette aufweisende Terminal 1 läßt sich durch den Einschubschlitz 74 in dem Schacht der Einheit 71 einschieben.

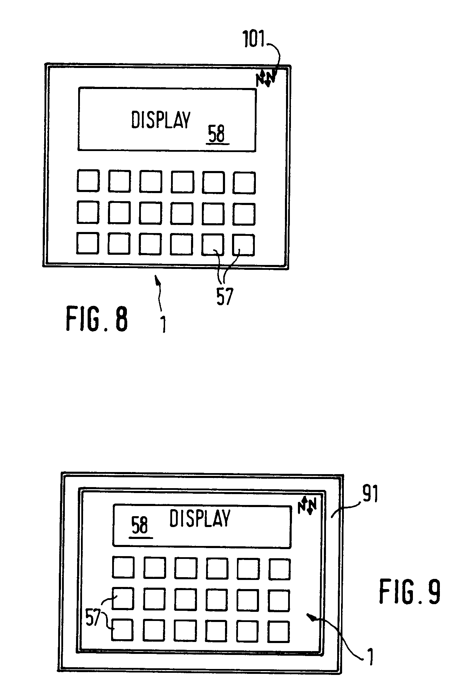

Figur 8 zeigt wieder mit 1 bezeichnet das Terminal in der Form und in den Abmessungen einer Diskette, jedoch zusätzlich mit einem Tastaturfeld 57 und einem Display 58, wie es z.B. von Rechnern in den Größenabmessungen einer Scheckkarte her prinzipiell bekannt ist. Mit 101 ist auf die bevorzugte elektrooptische Datenübertragung hingewiesen, zu der die zugehörigen Einheiten, optisches Sendeelement und optisches Empfangselement im Innern der Einheit 71 angeordnet sind.

Figur 9 zeigt eine Ausführung, bei der das Terminal nach Figur 8 kleiner ist als eine übliche 3 1/2 Zoll-Diskette oder die Abmessungen einer 3 1/2 Zoll-Diskette hat, hier aber der Einschub in einen 5 1/4 Zoll-Schacht vorgesehen ist. Mit 91 ist ein Adapterrahmen bezeichnet, in den die Diskette des Terminals 1 eingesetzt ist und mit dem das Terminal 1 in die Einheit 71 eingeschoben wird.

Der Vorzug einer solchen Konstruktion nach den Figuren 7 bis 9 ist, daß übliche mechanische Teile auch für die Erfindung verwendet werden können, was einen Preisvorteil ermöglicht.

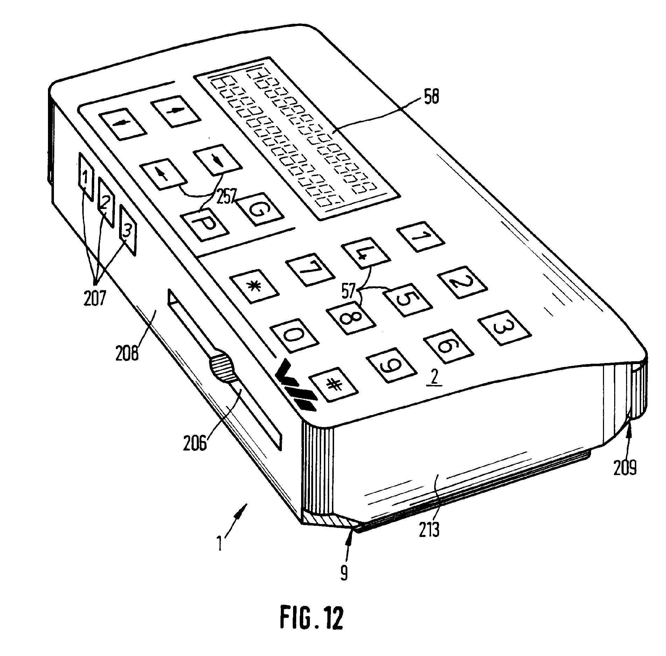

Entsprechendes kann für das im Objekt, z.B. dem Fahrzeug, verwendeten Gerät vorgesehen sein. In vielen Fällen wird jedoch ein eigenes Gerät zu benutzen sein, das in das Fahrzeug einzubauen ist, für das aber dann wiederum mechanische Standardteile und -einheiten ökonomisch vorteilhaft verwendet werden können. Zum Beispiel kann man die Einheit 71 im Fahrzeug in das Armaturenbrett, z.B. in die Einschuböffnung für einen Ascher einbauen. Einzelheiten dazu werden noch nachfolgend zu den Figuren 12 bis 15 beschrieben.

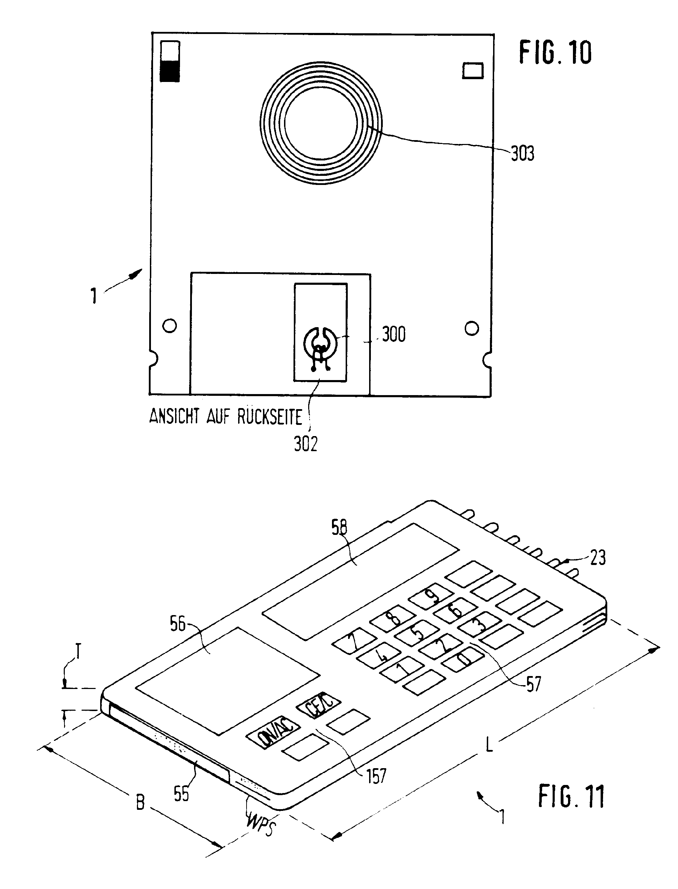

Es ist bereits oben auf die induktive Datentransfer-Kopplung des Terminals einerseits und andererseits mit dem Datengerät in dem Verkehrsmittel, z.B. dem Bordgerät, und der zentralen Bürostation, z.B. dem Büro-PC, hingewiesen worden. Die Figur 10 zeigt eine besondere Ausgestaltung hierzu, ausgeführt an bzw. in dem Gehäuse einer Diskette. Bei üblichen Disketten erfolgt das Eingeben und Auslesen der Daten in bzw. aus Aufzeichnungsspuren einer magnetischen Aufzeichnungsplatte. Bei der vorliegenden Erfindung ist dies jedoch durch Software ersetzt. In einem erfindungsgemäßen diskettenförmigen Terminal sind die oben angegebenen Einzelheiten enthalten, so z.B. auf der Vorderseite das zu den Figuren 8 und 9 beschriebene Tastaturfeld, das Display usw.

Übliche Disketten haben auf der hier als Rückseite betrachteten Seite ein Fenster (302), durch das hindurch mittels eines Magnetkopfes des Diskettenlaufwerkes die magnetische Speicherplatte abgefragt werden kann. Bei der Ausführungsform nach Figur 10 für ein intelligentes Terminal nach der Erfindung hat die Diskette in diesem Fenster einen eigenen Magnetkopf 300, der mit der Elektronik des Terminals verbunden ist und der die Datentransfer-Schnittstelle mit induktiver Übertragungsmöglichkeit bildet. Bei Einschub einer solchen als erfindungsgemäßes Terminal 1 präparierten Diskette in ein Diskettenlaufwerk kommt dieser Magnetkopf der Diskette in induktiven Kontakt mit dem Abtastmagnetkopf des Diskettenlaufwerks.

In dem Diskettenlaufwerk z.B. des PC's kann der darin enthaltene Diskettenantrieb unverändert bleiben, da in dem erfindungsgemäß vorgesehenen Terminal kein Teilstück für eine Ankupplung an die sich drehende Welle des Diskettenlaufwerks vorhanden ist.

Die Figur 10 zeigt nicht nur die Rückseite eines solchen diskettenförmigen Terminals 1 mit dem in dem Fenster 302 befindlichen eingefügten Magnetkopf des Terminals, sondern außerdem auch noch mit 303 bezeichnet eine ebenfalls auf der Rückseite angebrachte Induktionsspule. Diese Induktionsspule 303 ist in dem Terminal mit der Stromversorgung verbunden. Diese Spule 303 dient zur induktiven Energieübertragung von einer in dem schon angegebenen Diskettenlaufwerk zusätzlich eingefügten weiteren Induktionsspule auf diese Spule 303. Es ist hier somit induktive Energieübertragung von außen in das Terminal 1 vorgesehen.

Die Figur 11 zeigt ein Beispiel eines erfindungsgemäßen Terminals in der Form einer PC-Card. Die Länge L und die Breite B dieses wiederum mit 1 bezeichneten Terminals entsprechen den Abmessungen der handelsüblichen PC-Cards. Solche PC-Cards enthalten Elektronik, so z.B. einen Prozessor CPU und Arbeits-, Programm- und Daten-Speicher. Bekannte PC-Cards haben eine mechanische Kontaktleiste als Connector. Verwendet werden sie an sich als Klein- und Mini-Rechner, wobei sie mit einem dafür bestimmten Datengerät verbunden werden können, z.B. in einen Schacht eines solchen Datengerätes eingeschoben werden. Für die Erfindung sind diesem kartenförmigen Terminal die schon oben erwähnten Einzelheiten hinzugefügt, wie z.B. das Tastaturfeld 57, das Display 58, eine Solarzelle 56 und beispielsweise weitere Aktionstasten 157. Mit 55 ist auf einen Batterieeinschub hingewiesen. Der Connector ist wieder als Schnittstelle 23 bezeichnet. Durch diese zusätzlichen Einzelheiten hat das Terminal nach Figur 11 im Regelfall eine etwas größere Dicke als übliche PC-Cards (Memory-Cards). Ein Terminal nach Figur 11 ist in gleicher Weise wie voranstehend beschriebene Ausführungsformen eines Terminals 1 zu verwenden. Auch seine inneren Funktionsabläufe sind so wie oben beschrieben. Auch bei einem Terminal nach Figur 11 kann die Schnittstelle auch als elektro-optische oder induktive Schnittstelle ausgebildet sein, wobei dann jedoch gegebenenfalls noch ein galvanischer Kontaktanschluß für Energiezufuhr von außen in die Stromversorgung des Terminals vorgesehen sein kann.

Eine besonders interessierende Ausgestaltung für das in dem Verkehrsmittel, z.B. dem Kraftfahrzeug, vorgesehene Datengerät, z.B. für das Bordgerät 13, ist mit verschiedenen Varianten in den Figuren 12 bis 15 dargestellt und wird nachfolgend beschrieben. Insbesondere in modernen Kraftfahrzeugen ist es aufgrund des ausgefeilten Designs der Armaturentafel und der Mittelkonsole unter Umständen schwierig, ein solches Bordgerät oder Ergänzungsteile zu einem schon vorhandenen Bordcomputer so zu plazieren, daß diese auch vom Fahrer leicht erreichbar sind. Wieder geht es hier darum, ein erfindungsgemäßes Terminals als Datentransferträger zwischen einem solchen Bordgerät und einer zentralen Bürostation zu verwenden. Es können damit elektronisch bidirektional Informationen übertragen werden, z.B. aus der Bürostation Anweisungen in das Bordgerät gegeben werden, die der Fahrer dann während des Fahrtbetriebs entnehmen kann und/oder es werden vom Fahrtenschreiber in das Bordgerät und das Terminal Daten transferiert , die dann getrennt von dem Fahrzeug in der zentralen Bürostation allein aus dem Terminal abgefragt werden können. Die Ausbildung des Terminals als intelligentes Terminal mit einer Eingabeeinrichtung, wie z. B. dem Tastaturfeld, ermöglicht es, weitere Informationen in das Terminal einzugeben, und zwar zur Übertragung in das Bordgerät und/oder in die zentrale Bürostation. Insbesondere ist das Terminal so ausgebildet, daß es auch eine Sicherheits-Codierung enthält, z.B ein bestimmtes intelligentes Terminal nur in einem dazu bestimmt ausgewählten Bordgerät und/oder Bürostation verwendet und/oder abgefragt bzw. mit Daten gespeist werden kann.

Ein ganz wichtiges Merkmal der Ausführungen der Figuren 12 bis 15 ist die getroffene Wahl des Ortes für das im Inneren des Fahrzeugs zu plazierende Datengerät, in das dann das Terminal einzuschieben bzw. einzulegen oder dgl. einzufügen ist. Gute Bedienbarkeit des Tastaturfeldes und bequemes Einschieben des Terminals sind für die Akzeptanz beim Kunden sehr wichtige Gesichtspunkte. Für die Ausführungen der Figuren 12 bis 15 ist der in jedem Auto vorgesehene Platz des (auch) für den Fahrer vorgesehenen Aschenbechers ganz oder teilweise benutzt. Ein solcher Aschenbecher ist regelmäßig in der Armaturentafel oder im Bereich der Mittelkonsole angeordnet. In den meisten Fahrzeugtypen ist für den Aschenbecher ein Schacht in der Armaturentafel/Konsole vorgesehen, in dem, zum Reinigen herausnehmbar, dieser Aschenbecher eingesetzt ist.

Für die hier beschriebene Ausgestaltung der Erfindung wird dieser Aschenbecher herausgenommen und es wird in diesen Schacht und insbesondere in dessen für diesen Aschenbecher vorgesehene Halterung das schon oben genannte Datengerät bzw. Bordgerät eingesetzt. Gemäß einer ersten Ausführungsform der Erfindung hat das vorgesehene Datengerät die äußere Form des herausgenommenen Aschenbechers. Insbesondere hat gemäß diesem Aspekt das so bemessene Datengerät die Halterungen, die an dem Aschenbecher vorgesehen sind und mit denen dieser Aschenbecher in die Halterungsvorrichtungen des Schachtes eingreift, aus dem der Aschenbecher herausgenommen worden ist.

Eine solche erste Ausführungsform der Erfindung hat den Vorzug, daß in dem Fahrzeug keine mechanisch-konstruktiven Änderungen auszuführen sind und allein die am Fahrzeug vorhandenen Halterungsmittel verwendet werden. Es sind lediglich noch die Verbindungsleitungen für Stromversorgung und Datenübermittelung in das Fahrzeug nachzurüsten.

Gemäß einer anderen Ausführungsform ist eine zusätzlich vorzusehende Einrichtung vorhanden, die als mechanischkonstruktives Verbindungsglied zwischen den im Fahrzeug im Schacht für den Aschenbecher vorgesehenen Halterungen und dem in diesem Schacht zu halternden Datengerät dient. Dabei kann das Datengerät von dem herausgenommenen Aschenbecher abweichende (kleinere) Abmessungen haben. Diese Einrichtung hat den im Schacht vorhandenen Halterungen entsprechende Halterungsmittel und es sind Maßnahmen zur Halterung des Datengerätes in dieser Einrichtung vorgesehen. Auch hier sind wiederum die Stromversorgungs-Verbindung und die Datentransfer-Verbindung vorzusehen. Es kann anstelle einer Stromversorgungsverbindung das Datengerät auch mit einer eigenen Stromversorgung aus z.B. einem Akkumulator ausgerüstet sein.

Diesen Ausführungsformen gemeinsam ist, daß das Datengerät anstelle des Aschenbechers ein Einschubteil der Armaturentafel/Konsole ist und ebenso wie der Aschenbecher das erfindungsgemäß vorgesehene und im Schacht gehalterte Datengerät zur Bedienung herausgezogen oder herausgeklappt werden kann. Dazu sind Anzeige- und Bedienungselemente, z.B. Tasten, des Datengerätes so angeordnet, daß sie zumindest in der Benutzungslage sichtbar bzw. frei zugänglich sind. Sie können auch zumindeste teilweise in der Vorderfront des Datengerätes angeordnet sein und sind damit auch dann zugänglich, wenn sich das Datengerät im Schacht befindet.

Für das z.B. Einschieben des Datenträgers, dieser vorzugsweise in der oben beschriebenen Form einer Karte mit darin enthaltener Elektronik, hat dieses Datengerät eine Einschuböffnung oder sinngemäß eine Öffnung für das Einlegen einer solchen Karte.

Das Datengerät kann also z.B. den gesamten, ansonsten dem Aschenbecher zur Verfügung stehenden Raum ausfüllen. Es kann aber auch vorgesehen sein, daß für das Datengerät nur ein Anteil dieses Raumes benutzt wird und daneben ein dann jedoch verkleinerter Aschenbecher vorgesehen ist. Natürlich ist für diesen Fall eine solche Konstruktion vorzusehen, die Beschädigungen des Datengerätes ausschließt, die bei unachtsamer Benutzung des Aschenbechers mittels einer brennenden Zigarette herbeigeführt werden könnten.

Da die verschiedenen Fahrzeugtypen meistensteils verschieden große und/oder in ihren Abmessungsrelationen unterschiedliche Aschenbecher haben, für das Datengerät u.U. aber eine möglichst einheitliche und für viele Fahrzeugtypen verwendbare Größenabmessung von Vorteil ist, kann als Weiterbildung vorgesehen sein, daß ein in diesem Sinne standardisiertes Datengerät je nach bestimmungsgemäßem Fahrzeugtyp einen zugeordneten, gegebenenfalls mit dem Datengerät verbundenen Adapterkörper besitzt.

Diese voranstehend beschriebenen vorteilhaften Maßnahmen sind deshalb so vorteilhaft, weil sie keine wesentlichen Umbaumaßnahmen in bzw. am Fahrzeug erfordern, was für die praktische Einführung der Erfindung und ihrer technischen Vorteile sehr nützlich ist.

Es ist oben bereits auf das Einschieben bzw. Einlegen des Datenträgers hingewiesen worden. Zum Beispiel für das Einschieben wird ein außenliegender Schlitz eines im Datengerät befindlichen Schachtes benötigt. Dieser Schlitz kann frei zugänglich z.B. in der Vorderfront des Datengerätes plaziert sein. Es kann auch vorgesehen sein, daß dieser Schlitz verdeckt ist und erst auf ein einzugebendes Codesignal hin sich öffnet.

In der Regel wird man das bereits oben erwähnte Tastenfeld und gegebenenfalls vorteilhafterweise auch das Display so anordnen, daß diese Teile des Datengerätes bei Nichtgebrauch verdeckt sind. Hierzu sind das Datengerät und die Mittel bzw. Einrichtung für seine Halterung so ausgebildet, daß nur im in die Betriebsstellung herausgezogenem oder herausgeklapptem Gerät Tastenfeld und Display zugänglich sind. Das Herausziehen nach Art einer Schublade bzw. das Herausklappen ist durch die Halterung so weit begrenzt, daß das Datengerät für die Bedienung ausreichend solide gehaltert ist.

Für die elektrische Verbindung des an seinem vorgesehenen Ort im Kraftfahrzeug erfindungsgemäß eingesetzten Daten bzw. Bordgerätes mit diesem Kraftfahrzeug ist eine flexible Stromversorgungsleitung vorgesehen. Die für die Übertragung von Daten zwischen dem Datengerät und dem Kraftfahrzeug vorzusehenden Verbindungen können Kupferleitungen, Glasfaserleitungen, optische Datenübertragung und dgl. sein. Entsprechende Verbindungsanschlüsse sind als notwendige Umbaumaßnahme im Kraftfahrzeug vorzusehen.

In dem Datengerät befinden sich zur Datenaufnahme und zur Datenabgabe vorgesehene elektronische Einheiten. Zu diesen enthält insbesondere die o.g. ältere Anmeldung ins einzelne gehende Angaben. Auch ist die Eingabe nicht auf das schon beschriebene Tastenfeld beschränkt. Wie oben beschrieben, kann diese Eingabe auch über das Autotelefon von entferntem Ort her erfolgen. Desgleichen kann auch die dort beschriebene Datenausgabe über Autotelefon vorgesehen sein. Insbesondere kann diese Betriebsweise auch für die Datenpflege im Datengerät genutzt werden.

Außer der vorgenannten Elektronik kann z.B. auch ein Minidrucker (zusätzlich zum Display) als visuelle Ausgabeeinrichtung in dem beschriebenen Datengerät vorhanden sein. Zu verwenden ist ein solcher Minidrucker z.B. für die Ausgabe von gedruckten Zetteln, z.B. als Alternative zu üblichen Lieferscheinen und dgl.

Der zusätzliche Einbau eines Kartenlesers ermöglicht außerdem einen Datenaustausch an andere Rechner.

Die beigefügte Figur 12 zeigt in perspektivischer Ansicht ein Datengerät 213, das erfindungsgemäß insbesondere im Kraftfahrzeug zu verwenden und vorzugsweise anstelle des Aschenbechers mit seinen erfindungsgemäßen Halterungen 209 in den für diesen Aschenbecher vorgesehenen Schacht der Armaturentafel herausziehbar/herausklappbar einzusetzen ist. Das Gerät 13 hat auf seiner (eingesetzt in das Kraftfahrzeug) oberen Seite 202 zwei Tastenfelder 57 und 257 und ein Anzeigedisplay 58. Mit 206 ist der für das Einschieben des Datenträgers, dieser vorzugsweise in der Form einer Karte, vorgesehene Schlitz bezeichnet. Als Beispiel sind mit 207 bezeichnete stets zugängliche weitere Tasten in der Frontseite 208 des Gerätes 213 vorgesehen. Diese Tasten 207 können z.B. dazu dienen, daß erst nach einer codierten Eingabe das Herausziehen oder dergl. des Gerätes zum Inbetriebnehmen desselben möglich ist.

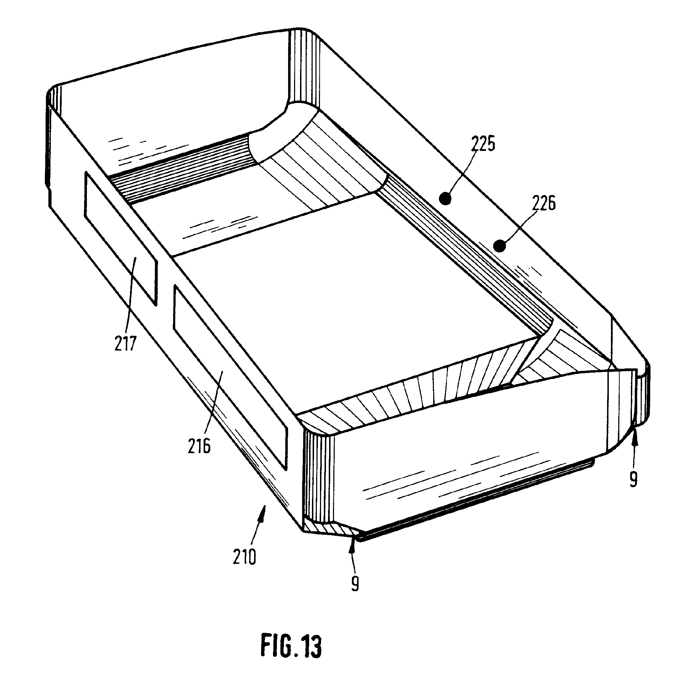

Figur 13 zeigt eine oben erwähnte Variante einer solchen Ausführungsform. Die Einrichtung 210 als Halteelement und Verbindungsteil zwischen einem wie ansonsten zur in Figur 12 beschriebenen Datengerät und der Aschenbecher-Halterung ist. Durchbrüche für den Schlitz 206 und die Tasten 207 der Vorderfront 208 des Gerätes sind mit 216 bzw. 217 bezeichnet.

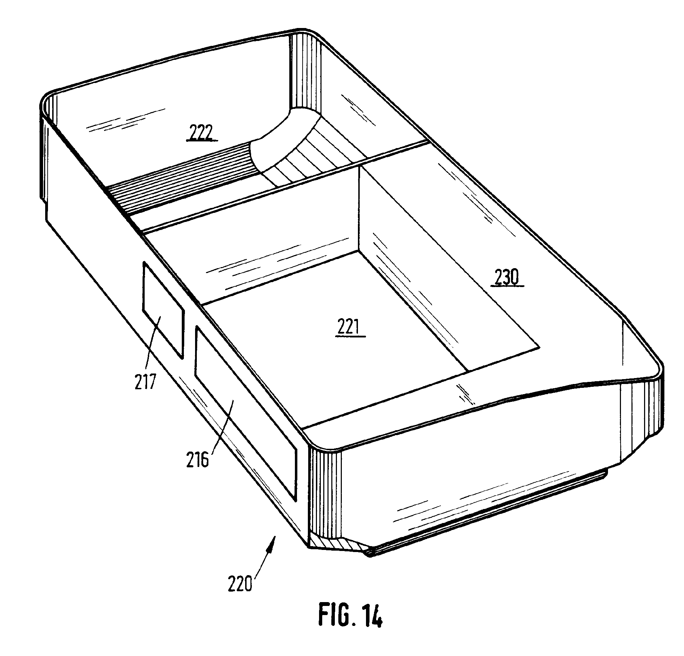

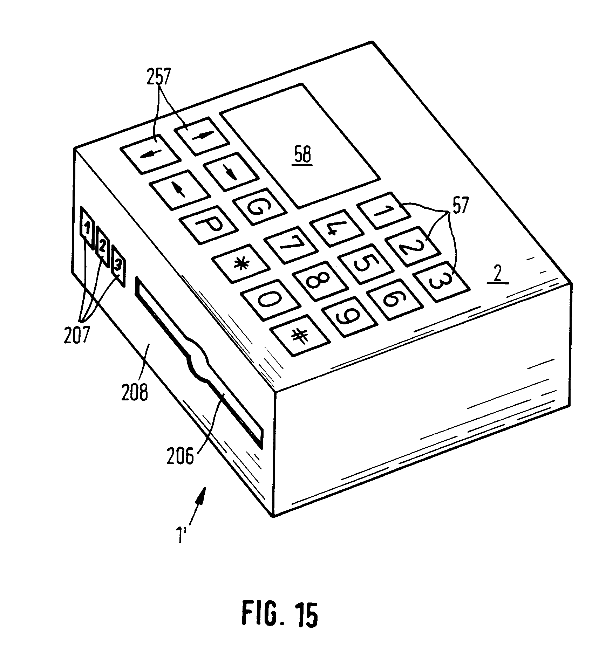

Figur 14 zeigt eine Alternative zur Ausführung nach Figur 13. Die in Figur 14 gezeigte Einrichtung 220 für das Datengerät, das hier vergleichsweise zur Figur 12 in kleineren Außenabmessungen vorliegt, ist geteilt. Die Aussparung 221 des einen Anteils der Einrichtung 220 ist angepaßt und dient dazu, das Datengerät der Figur 15 aufzunehmen. In den weiteren Anteil 222 kann z.B. ein kleinerer Aschenbecher für den "Notfall" (herausnehmbar) eingesetzt sein. Eine Einrichtung 210,220 nach dem Prinzip der Ausführungen der Figuren 2 und 3 kann auch für einen zusätzlichen Adapter 230 für ein Datengerät mit standardisierten Außenmaßen bestimmt sein, wobei die Außenmaße der Einrichtung 210,220 dem jeweiligen Kraftfahrzeugtyp angepaßt sind. Der Adapter kann für ein standardisiertes Datengerät z.B. ein einzelner, zusätzlich einzulegender Körper sein und/oder als ein im Inneren der Einrichtung 210,220 eingefügter Körper vorliegen.

Im Schacht und am Datengerät (Figur 12) bzw. an der Einrichtung (Fig. 13, 14) sind vorzugsweise an der Rückseite Kontaktvorrichtungen 225,226 vorgesehen. Zum einen dienen diese der Stromversorgung des Datengerätes aus z.B. der Anlage des Kraftfahrzeuges. Zum anderen ist eine Kontaktvorrichtung vorgesehen, die dem Datentransfer zwischen dem Datengerät und der Vorrichtung dient, in der sich der Schacht befindet, bzw. die letztendlich das Fahrzeug ist.

## Patentansprüche

1. System mit wenigstens zwei als Rechner ausgebildeten Datengeräten (13,15) voneinander unterschiedlicher Art,
bei dem für bidirektionalen Datentransfer zwischen diesen Datengeräten (13,15) ein intelligentes Terminal (1) vorgesehen ist, wobei für den Datentransfer diese unterschiedlichen Datengeräte (13,15) des Systems gleich ausgebildete Aufnahmeeinrichtungen für das Terminal (1) aufweisen,
wobei das intelligente Terminal (1)
eine zentrale Prozessoreinheit (31),
einen Arbeits- und Programmspeicher (33),
mindestens eine Schnittstelle (23) zur zeitlich wahlweisen Verbindung dieses Terminals (1) mit dem jeweiligen Datengerät (13,15) und
eine eigene Stromversorgung (55) hat,
dadurch gekennzeichnet,
daß das Terminal (1) ein Tastaturfeld (57) für eine direkte Dateneingabe in das Terminal (1) aufweist,
wobei in diesem Terminal (1) zusätzliche wahlfreie Beeinflussung und/oder Ergänzung der zu transferierenden Daten vorgesehen ist, und
daß in mindestens einem der Datengeräte (13, 15) der Zugang zu im Terminal (1) gespeicherten Daten nur mit einem in das Terminal (1) eingegebenen Geheimcode aktiviert werden kann.

2. System nach Anspruch 1,
bei dem das eine Datengerät ein Bordgerät (13) ist, das in einem Verkehrsmittel plaziert ist, und ein anderes davon unterschiedliches Datengerät eine Bürostation (15) ist.

3. System nach Anspruch 1 oder 2,
bei dem zur Datensicherung eine über das Tastaturfeld (57) aktivierbare Code-Verriegelung zur Vermeidung unbefugter Datenbenutzung vorgesehen ist.

4. System nach Anspruch 1, 2 oder 3,
bei dem die eigene Stromversorgung des Terminals (1) eine Solarzelle umfaßt.

5. System nach einem der Ansprüche 1 bis 4,
bei dem auf dem Terminal (1) zusätzlich ein Display (58) angeordnet ist.

6. System nach Anspruch 5,
bei dem mittels des Tastaturfelds (57) abrufbar Speicherinhalt des Terminals (1) auf dem Display (58) sichtbar zu machen ist.

7. System nach einem der Ansprüche 1 bis 6,
bei dem für die Schnittstelle (23) zwischen dem Terminal (1) einerseits und dem einen Datengerät (13) und einem davon unterschiedlichen Datengerät (15) andererseits und/oder für eine externe Zuleitung an die eigene Stromversorgung (54) des Terminals (1) Kontaktierungselemente vorgesehen sind.

8. System nach einem der Ansprüche 1 bis 7,
bei dem für die Schnittstelle (23) für Datentransfer zwischen Terminal (1) einerseits und andererseits dem einen Datengerät (13) und einem davon unterschiedlichen Datengerät (15) eine elektro-optische Koppeleinrichtung vorgesehen ist.

9. System nach einem der Ansprüche 1 bis 7,
bei dem für die Schnittstelle (23) für Datentransfer zwischen dem Terminal (1) einerseits und andererseits dem einen Datengerät (13) und dem einen davon unterschiedlichen Datengerät (15) eine induktive Koppeleinrichtung vorgesehen ist.

10. System nach Anspruch 9,
bei dem bei einem Terminal (101) in den Abmessungen einer üblichen Diskette im Bereich des üblichen Fensters (302) einer solchen Diskette ein Magnetkopf (300) als ein Teil einer induktiven Koppeleinrichtung angeordnet ist, so daß bei Einschub des Terminals in die Aufnahmeeinrichtung dieser Magnetkopf des Terminals dem Magnetkopf eines üblichen Disketten-Lesegerätes gegenüberliegend positioniert ist und induktive Verbindung zwischen diesen beiden Magnetköpfen für den Datentransfer besteht und wobei der Magnetkopf (300) des Terminals (101) mit der Elektronik des Terminals verbunden ist.

11. System nach einem der Ansprüche 1 bis 10,
bei dem bei einem Terminal (101) in den Abmessungen einer üblichen Diskette zur Zuführung von Energie einer Stromversorgung auf bzw. in einer Fläche des Terminals eine flach ausgeführte Induktionsspule (303) angebracht ist, die an dem Terminal so positioniert ist, daß sie in Arbeitsstellung des Terminals (101) in dem einen und/oder im anderen davon unterschiedlichen Datengerät (13,15) mit einer weiteren Induktionsspule induktiv gekoppelt ist, die in diesem(n) Datengerät(en) an koordinierter Stelle angeordnet ist (sind).

12. System nach einem der Ansprüche 2 bis 11,
bei dem das Bordgerät (13) ein in dem Verkehrsmittel ohnehin vorgesehener Bordcomputer ist, dessen Aufnahmeeinrichtung für den Einschub des intelligenten Terminals (1,101) dieses Systems angepaßt modifiziert ist.

13. System nach einem der Ansprüche 2 bis 10,
bei dem das Bordgerät (13) ein zusätzlich in das Verkehrsmittel installiertes/einzusetzendes Datengerät ist, das für den Einschub eines Terminals (1,101) des Systems angepaßt modifiziert ist.

14. System nach Anspruch 13,
bei dem das Bordgerät (13) in einen in dem Verkehrsmittel vorgesehenen Schacht zu installieren/einzusetzen ist und für die Bedienung dieses Bordgerätes dieses aus diesem Schacht in eine Benutzungslage herausziehbar/herausklappbar ist und daß an diesem bzw. für dieses Bordgerät Mittel (109,110,120) zur Halterung desselben in Halterungen dieses Schachtes vorgesehen sind.

15. System nach Anspruch 14,
bei dem dieser Schacht in der Armaturentafel/Mittelkonsole eines Kraftfahrzeuges vorgesehen ist, wobei dieser Schacht ansonsten für die Aufnahme eines dort herausnehmbaren Aschenbechers bestimmt ist.

16. System nach Anspruch 14 oder 15,
bei dem das Bordgerät hinsichtlich seiner Form der Form dieses Schachtes angepaßt ist und an seinem Äußeren Halterungen (209) aufweist, die wie die Halterungen am Aschenbecher in die Halterungen des Schachtes eingreifen.

17. System nach einem der Ansprüche 14 bis 16,
bei dem als Mittel zur Halterung des Bordgerätes (13) in dem Schacht eine in diesen Schacht hineinpassende Einrichtung (210,220) vorgesehen ist.

18. System nach Anspruch 17,
bei dem diese Einrichtung (210,220) Halterungen gleich denen des Aschenbechers hat, die in die Halterungen des Schachtes des Aschenbechers gleich diesem eingreifen.

19. System nach einem der Ansprüche 14 bis 18,
bei dem das Bordgerät (13) so bemessen und ausgeführt ist, daß davon der verfügbare Schacht voll in Anspruch genommen ist.

20. System nach einem der Ansprüche 14 bis 18,
bei dem das Bordgerät (13′) eine in seinen Abmessungen vorgegebene Form hat und wenigstens ein zugeordneter Adapter vorgesehen ist und Bordgerät und Adapter zusammengenommen in die Einrichtung (210,220) hineinpassend bemessen sind, die den Schacht voll in Anspruch nimmt.

21. System nach einem der Ansprüche 14 bis 18,
bei dem das Bordgerät (13′), ein gegebenenfalls vorgesehener Adapter (230) und ein weiterer Anteil (222) für einen verkleinerten Aschenbecher zusammengenommen in die Einrichtung (220) hineinpassend bemessen sind, die den Schacht voll in Anspruch nimmt.

22. System nach einem der Ansprüche 18 bis 21,
bei dem diese Einrichtung (210,220) derart ausgebildet ist,
daß das Bordgerät (13,13′) in diese Einrichtung (210) bzw. in eine in dieser Einrichtung (220) dafür vorgesehene Aussparung (221) lediglich einzulegen ist und
daß die Form der Einrichtung (210) bzw. der Aussparung (221) eine ausreichende Halterung für das Datengerät ist.

23. System nach Anspruch 22,
bei dem das Bordgerät (13′) eine vorgegebene Form hat und dieses zusammen mit dem gegebenenfalls vorgesehenen weiteren Anteil (222) in einem Adapter angeordnet ist, wobei dieser Adapter den Schacht voll in Anspruch nimmt und an diesem Adapter in die Halterungen des Schachtes eingreifende Halterungen vorgesehen sind.

24. System nach Anspruch 23,
bei dem die am Adapter vorgesehenen Halterungen solche gleich denen des Aschenbechers sind und wie diese in die Halterungen des Schachtes eingreifen.

25. System nach Anspruch 23 oder 24,
bei dem das Bordgerät (13′) und der gegebenenfalls vorgesehene weitere Anteil (222) mit Kunststoffmasse als ein dem Schacht angepaßter, mit den Halterungen versehener Adapter umgeben ist.

26. System nach Anspruch 25,
bei dem die Kunststoffmasse ein gespritzter Körper ist.

27. System nach einem der Ansprüche 18 bis 22,
bei dem die Einrichtung (210,220) in deren Vorderfront (208) mit wenigstens einem Durchbruch (210,217) für einen Datenträger-Einschubschlitz (206) des Bordgeräts und/oder für vorgesehene Tasten (207) und/oder für Anzeigemittel des Bordgeräts hat, die als für von außen zugänglich vorgesehen sind.

28. System nach einem der Ansprüche 14 bis 27,
bei dem das Bordgerät (13) Bedienungsmittel (207) und/oder eine Anzeigeeinrichtung aufweist, die auch in der Nichtbenutzungslage des Datengerätes, dieses angeordnet im Schacht des Transport-/Verkehrsmittels, für die Bedienungsperson zugänglich sind.

29. System nach einem der Ansprüche 2 bis 28,
bei dem der eine Rechner (13) einen Kommunikationsrechner (3,13) umfaßt, der mit Datenquellen (4,12) des Verkehrsmittels verbunden ist und das die der Schnittstelle (23) des Terminals (1) entsprechende Schnittstelle für den Datentransfer zwischen Bordgerät und Terminal umfaßt.

30. System nach einem der Ansprüche 2 bis 29,
bei dem die Bürostation ein PC (15) ist.

31. System nach Anspruch 30,
bei dem die Bürostation (15) als einen Anteil eine Vorrichtung (71) umfaßt, die die Abmessungen eines konventionellen Disketten-Einschubteils eines Computers hat und diese Vorrichtung (71) als Aufnahmeeinrichtung einen Einschubschacht (74) für das Terminal (1) des Systems hat.

32. System nach einem der Ansprüche 1 bis 31,
bei dem das Terminal (1) in die vorgesehene Aufnahmeeinrichtung (74) bestimmungsgemäß nur so weit einzuschieben ist, daß sich das Tastaturfeld (57) und/oder das Display (58) noch außerhalb befinden und zugänglich bzw. sichtbar ist (sind).

33. System nach einem der Ansprüche 2 bis 32,
bei dem ein Mobiltelefon (26) über eine Schnittstelle (25) mit dem Kommunikationsrechner (3,13) des Bordgerätes (13) zum Zwecke bidirektionalen Datentransfers verbunden ist.

## Claims

1. System comprising at least two data apparatuses (13, 15), constituted as computers, of kinds differing from one another,
in which there is provided an intelligent terminal (1) for bidirectional data transfer between these data apparatuses (13, 15),
these differing data apparatuses (13, 15) of the system having similarly formed receiving devices for the terminal (1), for the data transfer,
the intelligent terminal (1) having
a central processor unit (31),
a working and programme memory (33),
at least one interface (23) for selectively temporarily connecting this terminal (1) with the respective data apparatus (13, 15) concerned and
an independent current supply (55),
characterised in that,
the terminal (1) has a key field (57) for direct input of data into the terminal (1),
there being provided in this terminal (1) additionally freely selectable action on and/or supplementation of the data to be transferred,
and in that,
in at least one of the data apparatuses (13, 15) access to data stored in the terminal (1) can be activated only with a secret code entered into the terminal (1).

2. System according to claim 1,
one of the data apparatuses is an on-board apparatus (13), placed in a means of transportation, and another data apparatus, differing therefrom, is an office station (15).

3. System according to claim 1 or 2,
in which there is provided, for data security, a code lock activatable by means of the key field (57), for avoiding unauthorised use of data.

4. System according to claim 1, 2 or 3,
in which the independent current supply of the terminal (1) includes a solar cell.

5. System according to any of claims 1 to 4,
in which a display (58) is additionally arranged on the terminal (1).

6. System according to claim 5,
in which the memory contents of the terminal (1) which can be called up by means of the key field (57) can be made visible on the display (58).

7. System according to any of claims 1 to 6,
in which contact elements are provided for the interface (23) between the terminal (1) on the one hand and the one data apparatus (13) and a data apparatus (15) differing therefrom on the other hand, and/or for an external feed line to the independent current supply (54) of the terminal (1).

8. System according to any of claims 1 to 7,
in which there is provided an electro-optical coupling device for the interface (23) for data transfer between terminal (1) on the one hand and, on the other hand, the one data apparatus (13) and a data apparatus (15) differing therefrom.

9. System according to any of claims 1 to 7,
in which there is provided an inductive coupling device for the interface (23) for data transfer between the terminal (1) on the one hand and, on the other hand, the one data apparatus (13) and the one data apparatus (15) differing therefrom.

10. System according to claim 9,
in which, at a terminal (101), within the dimensions of a conventional diskette, in the region of the conventional window (302) of such a diskette, there is arranged a magnetic head (300) as a part of an inductive coupling device, such that upon insertion of the terminal into the receiving device this magnetic head of the terminal is positioned oppositely to the magnetic head of a conventional diskette reading apparatus and inductive connection between these two magnetic heads exists for the data transfer, the magnetic head (300) of the terminal (101) being connected with the electronics of the terminal.

11. System according to any of claims 1 to 10,
in which, at a terminal (101), for the feeding of energy of a current supply, within the dimensions of a conventional diskette, an induction coil (303), formed to be flat, is placed on or in a surface of the terminal, which induction coil is so positioned on the terminal that in the working position of the terminal (101) in the one and/or in the other data apparatus (13, 15) differing therefrom, the coil is inductively coupled with a further induction coil which is arranged in this or these data apparatus(es) at a coordinated position.

12. System according to any of claims 2 to 11,
in which the on-board apparatus (13) is an on-board computer already provided in the means of transportation, the receiving device of which computer is appropriately modified for the insertion of the intelligent terminal (1, 101) of this system.

13. System according to any of claims 2 to 10,
in which the on-board apparatus (13) is a data apparatus installed or to be placed additionally in the means of transportation, which data apparatus is suitably modified for the insertion of a terminal (1, 101) of this system.

14. System according to claim 13,
in which the on-board apparatus (13) is to be installed/placed in a slot provided in the means of transportation, and for the operation of this on-board apparatus it can be pulled out/folded out of this slot into a use disposition and in that on or for this on-board apparatus there are provided means (109, 110, 120) for mounting the same in mounting means of this slot.

15. System according to claim 14,
in which this slot is provided in the dashboard/central console of a motor vehicle, this slot being otherwise intended for receiving an ashtray which can be removed therefrom.

16. System according to claim 14 or 15,
in which, with regard to its form, the on-board apparatus is adapted to the form of this slot and
has mounting means (209) on its exterior which engage in the mounting means of the slot in the manner of the mounting means on the ashtray.

17. System according to any of claims 14 to 16,
in which, as means for mounting the on-board apparatus (13) in the slot, there is provided a device (210, 220) which fits into this slot.

18. System according to claim 17,
in which this device (210, 220) has mounting means, similar to those of the ashtray, which engage into the mounting means of the ashtray slot similarly to the ashtray.

19. System according to any of claims 14 to 18,
in which the on-board apparatus (13) is so dimensioned and formed that it fully takes up the available slot.

20. System according to any of claims 14 to 18,
in which the on-board apparatus (13′) has a form of predetermined dimensions and at least one associated adapter is provided, and on-board apparatus and adapter, taken together, are dimensioned to fit into the device (210, 220) which fully takes up the slot.

21. System according to any of claims 14 to 18,
in which the on-board apparatus (13′), an adapter (230) provided if appropriate, and a further portion (222) for an ashtray of reduced size, taken together, are dimensioned to fit into the device (220) which fully takes up the slot.

22. System according to any of claims 18 to 21,
in which this device (210, 220) is so formed that,
the on-board apparatus (13, 13′) need only be placed into this device (210) or into a recess (221) provided in this device (220) for the on-board apparatus,
and in that
the form of the device (210) or of the recess (221) provides an adequate mounting for the data apparatus.

23. System according to claim 22,
in which the on-board apparatus (13′) has a predetermined form and this together with a further portion (222), provided if appropriate, is arranged in an adapter, this adapter fully taking up the slot and there being provided on this adapter mounting means which engage into the mounting means of the slot.

24. System according to claim 23,
in which the mounting means provided on the adapter are such as to be similar to those of the ashtray and engage into the mounting means of the slot in the manner of the mounting means of the ashtray.

25. System according to claim 23 or 24,
in which the on-board apparatus (13′) and the further portion (222), provided if appropriate, is surrounded by plastics material as an adapter matched to the slot, provided with the mounting means.

26. System according to claim 25,
in which the plastic material is an extruded body.

27. System according to any of claims 18 to 22,
in which the device (210, 220) has, in its forward face (208) at least one opening (210, 217) for a data-carrier insertion slit (206) of the on-board apparatus and/or for keys provided (207) and/or for display means of the on-board apparatus, which are provided as to be externally accessible.

28. System according to any of claims 14 to 27,
in which the on-board apparatus (13) has operating means (207) and/or a display device which are accessible for the operator also in the non-use position of the data apparatus, with this arranged in the slot of the transportation means.

29. System according to any of claims 2 to 28,
in which a computer (13) includes a communication computer (3, 13) which is connected with data sources (4, 12) of the transportation means and which includes the interface, corresponding to the interface (23) of the terminal (1), for the data transfer between on-board apparatus and terminal.

30. System according to any of claims 2 to 29,
in which the office station is a PC (15).

31. System according to claim 30,
in which the office station (15) includes as a part a device (71) which has the dimensions of a conventional diskette insertion part of a computer, and this device (71) - as receiving device - has a push-in slot (74) for the terminal (1) of the system.

32. System according to any of claims 1 to 31,
in which the terminal (1) can purposively be pushed only so far into the provided receiving device (74) that the keyboard field (57) and/or the display (58) is or are still located externally and is or are accessible or visible.

33. System according to any of claims 2 to 32,
in which, for the purpose of bidirectional data transfer, a mobile telephone (26) is connected by way of an interface (25) with the communication computer (3, 13) of the on-board apparatus (13).

## Revendications

1. Système avec au moins deux appareils de traitement de données sous forme d'ordinateurs (13, 15) de genres différents entre eux, dans lequel un terminal intelligent (1) est prévu entre ces appareils (13, 15) pour le transfert bidirectionnel de données, dans lequel ces appareils différents (13, 15) présentent pour le transfert de données des dispositifs de réception de même construction pour le terminal (1),
dans lequel le terminal intelligent (1) comporte :
- une unité centrale de traitement (31),
- une mémoire de travail et de programme (33),
- au moins une interface (23) pour la mise en communication de ce terminal (1) avec les appareils (13, 15) respectifs, à des moments choisis, et
- sa propre alimentation en courant (55),
caractérisé en ce que le terminal (1) présente un clavier (57) pour une entrée directe de données dans le terminal (1), tandis qu'il est prévu dans ce terminal (1) la possibilité supplémentaire d'influencer, au choix, et/ou de compléter les données à transférer,
et
en ce que dans au moins un des appareils (13, 15) l'accès aux données en mémoire dans le terminal (1) ne peut être actionné qu'avec un code secret introduit dans le terminal (1).

2. Système selon la revendication 1, dans lequel un des appareils est un appareil de bord (13) placé dans un moyen de transport, et un autre appareil différent de celui-ci est un poste de bureau (15).

3. Système selon la revendication 1 ou 2, dans lequel est prévu un verrouillage codé pouvant être activé sur le clavier (57), pour éviter une utilisation illicite des données.

4. Système selon la revendication 1, 2 ou 3, dans lequel l'alimentation propre du terminal (1) en courant comporte une pile solaire.

5. Système selon une des revendications 1 à 4, dans lequel, en outre, un affichage (58) est disposé sur le terminal (1).

6. Système selon la revendication 5, dans lequel le contenu de mémoire du terminal (1) pouvant être appelé au moyen du clavier (57) peut être rendu visible sur l'affichage (58).

7. Système selon une des revendications 1 à 6, dans lequel sont prévus des éléments de mise en contact pour l'interface (23) joignant le terminal (1), d'une part à un (13) des appareils et d'autre part à l'autre (15) appareil différent de celui-ci, et/ou pour un raccordement externe à l'alimentation propre (54) du terminal (1).

8. Système selon une des revendications 1 à 7, dans lequel un dispositif de couplage électro-optique est prévu pour l'interface (23) pour le transfert de données entre le terminal (1) et l'un (13) des appareils et un autre (15) appareil différent de celui-ci.

9. Système selon une des revendications 1 à 7, dans lequel un dispositif de couplage inductif est prévu pour l'interface (23) pour le transfert de données, entre le terminal (1) et l'un (13) des appareils et un autre (15) appareil différent de celui-ci.

10. Système selon la revendication 9, dans lequel est disposée, dans un terminal (101) ayant les dimensions d'une disquette ordinaire, dans la zone de la fenêtre usuelle (302) pour une telle disquette, une tête magnétique (300) en tant que partie d'un dispositif de couplage inductif, de telle sorte que, lors de l'introduction du terminal dans le dispositif qui le reçoit, cette tête magnétique du terminal est positionnée en face de la tête magnétique d'un lecteur de disquette usuel et qu'il y a liaison inductive entre ces deux têtes magnétiques pour le transfert de données, tandis que la tête magnétique (300) du terminal (101) est reliée à l'électronique du terminal.

11. Système selon une des revendications 1 à 10, dans lequel est disposée dans un terminal (101) aux dimensions d'une disquette ordinaire, ou dans une face de ce terminal, une bobine d'induction plate (103) pour l'apport d'énergie d'une source d'alimentation, cette bobine étant positionnée sur le terminal de telle sorte que, dans la position de travail du terminal (101), elle est couplée inductivement avec une autre bobine d'induction dans l'un et/ou l'autre des appareils différents (13, 15), disposée en des endroits coordonnés dans ce ou ces appareils.

12. Système selon une des revendications 2 à 11, dans lequel l'appareil de bord (13) est un ordinateur de bord prévu par ailleurs dans le moyen de transport, dont le dispositif récepteur est modifié de manière appropriée pour l'introduction du terminal intelligent (1, 101) de ce système.

13. Système selon une des revendications 2 à 10, dans lequel l'appareil de bord (13) est un appareil à installer ou à introduire en supplément dans le moyen de transport, modifié de manière appropriée pour l'introduction d'un terminal (1, 10) du système.

14. Système selon la revendication 13, dans lequel l'appareil de bord (13) est à installer ou à insérer dans un logement prévu dans le moyen de transport et peut être extrait ou pivoté de ce logement pour venir en position d'utilisation, des moyens (109, 110, 120) étant prévus pour maintenir cet appareil dans ledit logement.

15. Système selon la revendication 14, dans lequel ce logement est prévu dans le tableau de bord ou la console centrale d'un véhicule à moteur, ce logement étant par ailleurs destiné à recevoir un cendrier amovible.

16. Système selon la revendication 14 ou 15, dans lequel l'appareil de bord a une forme adaptée à celle dudit logement et présente extérieurement des organes d'attache (209) venant en prise, de la même manière que ceux du cendrier, avec les organes d'attache dans le logement.

17. Système selon une des revendications 14 à 16, dans lequel est prévu, en tant que moyen de maintien de l'appareil de bord (13) dans le logement, un dispositif (210, 220) s'adaptant dans ce logement.

18. Système selon la revendication 17, dans lequel ce dispositif (210, 220) comporte des attaches semblables à celles du cendrier, venant en prise avec les attaches prévues dans le logement pour le cendrier, de la même manière que le cendrier.

19. Système selon une des revendications 14 à 18, dans lequel l'appareil de bord (13) a des dimensions et une forme telles qu'il utilise totalement la place disponible dans le logement.

20. Système selon une des revendications 14 à 18, dans lequel l'appareil de bord (13′) a des dimensions et une forme prédéterminées et au moins un adaptateur correspondant est prévu, l'appareil de bord et l'adaptateur ayant des dimensions appropriées pour s'adapter ensemble dans le dispositif (210, 220), lequel utilise totalement le logement.

21. Système selon une des revendications 14 à 18, dans lequel l'appareil de bord (13′), un adaptateur (230) prévu, le cas échéant, et un autre compartiment (222) pour un cendrier de taille réduite sont dimensionnés ensemble pour s'adapter au dispositif (220), lequel utilise complètement l'espace du logement.

22. Système selon une des revendications 18 à 21, dans lequel ce dispositif (210, 220) est conformé de telle sorte qu'il suffit de poser simplement l'appareil de bord (13, 13′) dans ce dispositif (210) ou dans un évidement (221) prévu à cet effet dans ce dispositif (220), tandis que la forme du dispositif (210) ou de l'évidement (221) assure un maintien suffisant de l'appareil.

23. Système selon la revendication 22, dans lequel l'appareil de bord (13′) a une forme prédéterminée et est disposé dans un adaptateur, ensemble avec l'autre compartiment (222) prévu, le cas échéant, cet adaptateur utilisant complètement l'espace du logement, et des attaches étant prévues sur cet adaptateur pour venir en prise avec les attaches du logement.

24. Système selon la revendication 23, dans lequel les attaches prévues sur l'adaptateur sont pareilles à celles du cendrier et s'engagent de même que celles-ci dans les attaches du logement.

25. Système selon la revendication 23 ou 24, dans lequel l'appareil de bord (13′) et l'autre compartiment (222) prévu, le cas échéant, sont entourés d'une masse de matière plastique en tant qu'adaptateur adapté au logement, muni des attaches.

26. Système selon la revendication 25, dans lequel la masse plastique est un corps moulé par injection.

27. Système selon une des revendications 18 à 22, dans lequel le dispositif (210, 220) comporte dans sa face antérieure (208) au moins une ouverture (210, 217) pour une fente d'introduction (206) d'un support de données de l'appareil de bord et/ou pour des touches (207) prévues et/ou pour des moyens d'affichage du calculateur, ces éléments étant prévus pour être accessibles par l'extérieur.

28. Système selon une des revendications 14 à 27, dans lequel l'appareil de bord (13) présente des moyens de commande (207) et/ou un dispositif d'affichage qui sont accessibles à l'utilisateur, même quand l'appareil n'est pas en position d'utilisation, cet appareil étant disposé dans le logement du moyen de transport.

29. Système selon une des revendications 2 à 28, dans lequel un ordinateur (13) comporte un ordinateur de communication (3, 13) qui est relié à des sources de données (4, 12) du véhicule, et qui comporte l'interface pour le transfert de données entre l'appareil de bord et le terminal, cette interface correspond à l'interface (23) du terminal (1).

30. Système selon une des revendications 2 à 29, dans lequel le poste de bureau est un PC (15).

31. Système selon la revendication 30, dans lequel le poste de bureau (15) comporte, en tant qu'une de ses parties, un dispositif (71) qui a les dimensions d'une pièce conventionnelle d'un ordinateur pour l'introduction d'une disquette, et ce dispositif (71) a un logement (74) pour l'introduction du terminal (1) du système.

32. Système selon une des revendications 1 à 31, dans lequel le terminal (1) ne peut, par destination, être inséré dans le dispositif récepteur prévu (74) que seulement à une profondeur telle que le clavier (57) et/ou l'affichage (58) se trouvent encore à l'extérieur et est ou sont accessibles et/ou visibles.

33. Système selon une des revendications 2 à 32, dans lequel un téléphone mobile (26) est relié par une interface (25) à l'ordinateur de communication (3, 13) de l'appareil de bord (13) aux fins de transfert bidirectionnel de données.
